(19) Europäisches Patentamt / European Patent Office / Office européen des brevets

(11) **EP 2 295 889 B1**

(12) **EUROPÄISCHE PATENTSCHRIFT**

(45) Veröffentlichungstag und Bekanntmachung des Hinweises auf die Patenterteilung:
**22.04.2015 Patentblatt 2015/17**

(51) Int Cl.:
*F25B 30/02* *(2006.01)*    *F28G 9/00* *(2006.01)*
*F28D 20/00* *(2006.01)*    *F24H 4/04* *(2006.01)*

(21) Anmeldenummer: **10170652.1**

(22) Anmeldetag: **23.07.2010**

(54) **Wärmepumpenkreislauf mit einem Kondensationsspeicherkessel**

Heat pump circuit with a condensing storage tank

Cycle de pompe à chaleur avec un réservoir de condensation

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **27.07.2009 DE 102009034879**

(43) Veröffentlichungstag der Anmeldung:
**16.03.2011 Patentblatt 2011/11**

(73) Patentinhaber: **Rombold Beteiligungs GmbH & Co. KG**
**70736 Fellbach (DE)**

(72) Erfinder:
• **Hückmann, Volker**
**74354 Besigheim (DE)**

• **Rein, O. Dieter**
**72770 Reitlingen-Gönningen (DE)**

(74) Vertreter: **Graf Glück Kritzenberger**
**Hermann-Köhl-Strasse 2a**
**93049 Regensburg (DE)**

(56) Entgegenhaltungen:
EP-A1- 1 865 266    EP-A2- 1 933 100
DE-A1- 2 729 668    DE-A1- 2 835 072
DE-A1- 3 142 536    DE-A1- 19 731 351
DE-A1-102005 001 511    DE-A1-102005 051 663
DE-U1-202008 006 026

**Beschreibung**

Die vorliegende Erfindung betrifft einen Wärmepumpenkreislauf mit einem Kondensationsspeicher.

Wärmepumpensysteme umfassen üblicherweise einen Verdampfer und einen Kondensator, wobei inzwischen integrierte Kondensationsspeicher existieren, welche den Speicherkessel eines Heizungssystems bilden und in welchem Kondensationswärmetauscher des Wärmepumpenkreislaufs integriert ist.

Das Problem bei herkömmlichen verdampferbasierten Wärmepumpensystemen besteht darin, dass die Vorlauftemperatur des Heizwassers begrenzt ist durch die Kondensationstemperatur des Fluids im Wärmepumpenkreislauf. Daher muss zur Erzielung einer vernünftigen Vorlauftemperatur des Heizkreislaufes die Kondensationstemperatur des Wärmepumpenkreislaufs angehoben werden, was energetisch sehr ungünstig ist, oder man erzielt nur Vorlauftemperaturen die allenfalls für Fußbodenheizungen ausreichend ist.

Die DE 27 29 668 A1 zeigt einen Wärmepumpenkreislauf gemäß dem Oberbegriff des Anspruchs 1.

Es ist Aufgabe der Erfindung, einen Wärmepumpenkreislauf mit einem Kondensationsspeicher für ein verdampferbasiertes Wärmepumpensystem zu schaffen, der bei geringer Kondensationstemperatur eine höhere Vorlauftemperatur des Heizwassers ermöglicht als bisher. Diese Aufgabe wird durch einen Wärmepumpenkreislauf gemäß Anspruch 1 gelöst. Vorteilhafte Weiterbildungen der Erfindung sind Gegenstand der Unteransprüche.

Der Kondensator in dem erfindungsgemäßen Kondensationsspeicher zeichnet sich darin aus, dass er beträchtlich überdimensioniert ist, so z.B. um den Faktor 2 größer ist, als es theoretisch gemäß nachfolgender Aufstellung erforderlich wäre.

Nachfolgend werden die Begriffe Wärmetauscher, Kondensationswärmetauscher und Kondensator synonym verwendet. In gleicher Weise werden die Begriffe Kessel und Speicherkessel synonym verwendet. Mit dem Ausdruck "Fluid" wird ein herkömmliches Kühl-/Wärmemittel eines Wärmepumpenkreislaufs bezeichnet.

Die theoretisch benötigte Fläche eines Kondensators (oder Kondensationswärmetauschers) errechnet sich nach folgender Formel:

$$A = Q/K \cdot \Delta t_m = m \cdot cp \cdot dt / K \cdot \Delta t_m$$

mit

A = Kontaktfläche des Wärmetauschers ($m^2$)
Q = Wärmefluss $m \cdot cp \cdot dt$ Wärmeleistung (kJ/h · K)
K = Wärmedurchgangszahl des Wärmetauschers
m = Massestrom (l/h)
dt = Temperaturdifferenz des Mediums vor/hinter Wärmetauscher (K)
$\Delta t_m$ = mittlere Temperaturdifferenz zwischen dem Fluid und dem Heizwasser (K) in einem Gegenstromwärmetauscher nach folgender Formel: $\Delta t_m = (\Delta T_g - \Delta T_k)/\ln(\Delta T_g/\Delta T_k)$, mit Tg = größere Differenztemperatur zwischen den Medien an einer Seite des Wärmetauschers und Tk = kleinere Differenztemperatur zwischen den Medien an der anderen Seite des Wärmetauschers
$C_p$ = Spezifische Wärmekapazität von Wasser (4,182 k J/kgK)

Mit dieser Formel wird in der Praxis die Fläche Wärmetauschers errechnet. Sie entspricht dem theoretischen Wert gemäß Anspruch 10.

Vorzugsweise beträgt die gemäß der vorliegenden Erfindung verwendete Kondensationswärmetauscherfläche jedoch mindestens Faktor 2 mal diesem theoretischen Wert. Vorzugsweise ist die Fläche sogar mindestens um den Faktor 3, oder Faktor 4 bis Faktor 8 oder mehr größer als der entsprechende theoretische Wert.

Man kann die Überdimensionierung des Kondensationswärmetauschers auch in anderer aber analoger Weise beschreiben. So sollte die Fläche des Wärmetauschers wenigstens 0,7 qm/ kW Heizleistung des Wärmepumpenkreislaufs betragen, vorzugsweise mehr als 0,8 qm/kW Heizleistung, insbesondere mehr als 1 qm/kW Heizleistung.

Nachfolgend wird der im Kondensator abgreifbare Energiegehalt des Fluids betrachtet. In einem Kondensationsspeicher wird Energie durch ein Fluid bzw. Wärmeübertragungsmittel eingeführt, welches beispielsweise beim Eintritt in den Kondensator eine Temperatur von 82° C hat. Die Kondensationstemperatur liegt so beispielsweise bei 50° C und das Kondensat hat eine Temperatur von 45° C bei einer Außentemperatur von 16° C. Die im Rahmen der Entwärmung des Fluids und Kondensation erzielbaren Energieanteile liegen wie folgt:

Übertemperatur 20 %,
Kondensation 72 %,
Unterkühlung 8 %.

Durch die Überdimensionierung des Kondensationswärmetauschers wird nun sowohl der Übertemperaturanteil, d.h. der Bereich vom Eintritt des Fluids bis zum Erreichen der Kondensationstemperatur aufgrund der stark vergrößerten Kontaktfläche mit dem im Speicherkessel befindlichen Heizwasser abgegriffen, wodurch zum einen der Übertemperaturenergieanteil von 20 % fast vollständig genutzt werden und zum anderen das Wasser im Heizungskessel über die Temperatur des Kondensationspunktes erwärmt werden kann.

Es kann somit durch die Erfindung eine Vorlauftemperatur im Speicherkessel erzielt werden, die höher liegt als der Kondensationspunkt des Fluids im Wärmepumpenkreislauf. Dies ist aus ökonomischer Sicht äußerst vorteilhaft, weil man bislang die Kondensationstemperatur im Kondensationswärmetauscher auf einen Punkt einstellen musste, der über der zu erzielenden Vorlauftemperatur lag, was energetisch sehr nachteilig ist. Denn je niedriger der Kondensationspunkt ist, desto wirtschaftlicher arbeitet die Anlage. Die Erhöhung des Kondensationspunktes wäre beispielsweise mit einem erhöhten Energieaufwand von 30% verbunden.

Wenn man bislang einen niedrigeren Kondensationspunkt wählte, beispielsweise von 40 - 45 Grad C, so führte das zu niedrigen Vorlauftemperaturen unterhalb des Kondensationspunktes, die allenfalls für Fußbodenheizungen ausreichend war.

Mit der Erfindung ist der Kondensationspunkt nicht mehr der begrenzende Faktor für die Höhe der Vorlauftemperatur, sondern man kann durch die starke Überdimensionierung des Wärmetauschers den Übertemperaturbereich zum Boostender Vorlauftemperatur im Speicherkessel nutzen.

In gleicher Weise wird das Fluid nach der Kondensation in dem überdimensionierten Wärmetauscher noch lange im Wärmekontakt mit dem Heizwasser im Speicherkessel weitergeführt, so dass auch der Unterkühlungsenergieanteil von 8 % weitgehend genutzt wird. Hieraus ergibt sich auch ein insgesamt wesentlich verbesserter Wirkungsgrad.

Insbesondere der Übertemperaturenergieanteil wird bedeutend besser genutzt, wenn im oberen Bereich des Speichers eine Einrichtung vorgesehen ist, die den Wärmeaustausch zwischen dem Kondensationswärmetauscher und dem Wasser im Speicherkessel so steuert, dass die Differenztemperatur zwischen dem Kesselwasser und dem Fluid im Kondensationswärmetauscher herabgesetzt wird. Hierfür wird der Zugang des Wassers im Speicherkessel zu dem Kondensationswärmetauscher begrenzt. Denn wenn weniger Wasser in Kontakt mit dem Kondensationswärmetauscher kommt, wird dieses stärker erwärmt und das Fluid im Kondensationswärmetauscher kühlt nicht so schnell ab. Im Endeffekt wird hierbei wiederum eine stärkere Erwärmung des Wassers im Speicherkessel erreicht, die wiederum eine wesentliche Erhöhung der Vorlauftemperatur ermöglicht.

Die Einrichtung zur Verringerung der Strömungsmenge an Kesselwasser, die in Kontakt mit dem Wärmetauscher kommt, kann konstruktiv durch den Kondensationswärmetauscher selber realisiert werden oder konstruktiv in der Anordnung des Wärmetauschers im Speicherkessel, z.B. durch die dichte Anordnung zumindest des Übertemperaturbereichs des Wärmetauschers nahe den Wänden des Speicherkessels. Der Übertemperaturbereich des Wärmetauschers ist derjenige, in welchem die Temperatur des Fluids im Kondensator oberhalb der Kondensationstemperatur liegt.

Die Einrichtung ist in konstruktiv einfacher Weise durch Trennwände gebildet, die sich vorzugsweise in einem definierten Abstand zu den Kondensationswärmetauscherflächen, vorzugsweise senkrecht erstrecken.

Auf diese Weise strömt das Wasser zwischen diesen Trennwänden und dem Kondensationswärmetauscher in Art eines Kamineffekts langsam nach oben, was den Wärmeaustausch zwischen dem Wärmetauscher und dem Heizwasser im Speicherkessel herabsetzt und zu einer starken Erwärmung der Wassertemperatur im Speicherkessel über die Kondensationstemperatur des Fluids führt. Eine derartige Anordnung mit Trennwänden ist konstruktiv einfach zu realisieren und sehr effektiv.

Vorzugsweise kann oben oberhalb der Trennwände und unterhalb der Trennwände ein normaler Austausch des Wassers, vorzugsweise über den gesamten Querschnitt des Speicherkessels stattfinden.

Die Öffnung für den Vorlauftemperatur-Anschluss eines Heizwasserkreislaufs mündet vorzugsweise im oberen Bereich der Trennwand oder oberhalb der Trennwand in den Speicherkessel, wo die Wassertemperatur über die Kondensationstemperatur erwärmt ist.

Um eine große flächige Anordnung des Kondensationswärmetauschers im Speicherkessel zu realisieren, ist der Kondensationswärmetauscher ringförmig parallel und in einem geringen Abstand zu den Innenwänden des Speicherkessels angeordnet ist. Der Abstand sollte vorzugsweise zwischen 2 und 20 cm liegen.

In dem ringförmigen Kondensationswärmetauscher ist das Fluid vorzugsweise in sich schraubenförmig nach unten erstreckenden Strömungskanälen, z.B. Rohren geführt, so dass es den Speicherkessel langsam in dem Kondensator von oben nach unten durchströmt, während das Wasser im Gegenstrom durch die Aufheizung im Speicherkessel von unten nach oben strömt. Die Strömungskanäle können mit Flächenstrukturen zur Verbesserung des Wärmeaustauschs in an sich bekannter Weise versehen sein.

Um eine insbesondere gute Energieausnutzung des Übertemperaturanteils und des Unterkühlungsanteils zu gewährleisten, weist der Kondensationswärmetauscher vertikale Abschnitte auf, die miteinander verbunden sind, wobei im oberen Abschnitt der Übertemperaturanteil und Kondensationsanteil und im unteren Anteil der Unterkühlungsanteil umgesetzt wird. Im unteren Teil kann auch noch ein Teil der Kondensationswärme umgesetzt werden. Der Speicherkessel ist in der Form eines kreisrunden Zylinders ausgebildet und der Wärmetauscher ist ringförmig an den Innenwänden in einem geringen Abstand von wenigen Zentimetern angeordnet. Weiterhin ist an der Innenseite des Wärmetauschers eine ringförmige Trennwand ebenfalls mit einem Abstand von wenigen Zentimetern angeordnet.

Der Abstand zwischen dem Kondensationswärmetauscher und der Innenwand des Speicherkessels als auch zwischen dem Kondensationswärmetauscher und der Trennwand sollte zwischen 2 und 20 cm, vorzugsweise zwischen 1 und 20 cm, vorzugsweise zwischen 2 und 10 cm liegen.

Die Fläche des Kondensationswärmetauschers sollte im Falle der Anordnung des Kondensators bzw. Kondensationswärmetauschers in einem geringen Abstand von der Innenwand des Speicherkessels wenigstens 50 %, vorzugsweise wenigstens 60 % der Innenfläche der vertikalen Kesselwand überdecken.

Um eine gewünschte Vorlauftemperatur einstellen zu können, sollte der Speicherkessel mindestens einen Heizungsvorlaufanschluss in seinem oberen Bereich und einen Heizungsvorlaufanschluss in seinem mittleren Bereich aufweisen. An diese beiden Anschlüsse kann dann beispielsweise eine Mischarmatur angeschlossen werden, durch welche eine beliebige Vorlauftemperatur zwischen dem Mittelabgriff und dem oberen Abgriff eingestellt werden kann.

Weiterhin hat der Kondensationsspeicher vorzugsweise einen Heizungsrücklaufanschluss, der in ein an sich bekanntes Schichtrohr mündet, welches vertikal in dem Speicherkessel verläuft und mehrere Austritte in unterschiedlicher Höhe des Speicherkessels aufweist. Ein derartiges Schichtrohr hat einen sehr großen Durchmesser von beispielsweise 5 - 15 cm, vorzugsweise 7-10 cm und trägt dazu bei, dass das Wasser durch einen Austritt in einer solchen Höhe in den Speicherkessel einströmt, in welcher Höhe die gleiche Temperatur wie die Rücklauftemperatur herrscht. Auf diese Weise wird vermieden, dass das kühlere Wasser von ganz unten im Speicherkessel immer wieder nach oben aufgewirbelt wird.

Vorzugsweise ist im oberen Bereich des Speicherkessels oberhalb des Kondensationswärmetauschers eine Spüleinrichtung angeordnet. Die Spüleinrichtung ist vorzugsweise als Ringrohr mit nach unten ausgerichteten Spülöffnungen ausgebildet. Durch sie kann eine Reinigungsflüssigkeit oder auch Wasser mit Hochdruck auf den Kondensationswärmetauscher gesprüht werden, um diesen von Verunreinigungen zu reinigen.

Wenn der Kondensationsspeicher auch zur Brauchwasseraufbereitung genutzt werden soll, ist es vorteilhaft, in dem Kesselinneren eine sich vertikal erstreckende Rohrwendel für eine Brauchwassererwärmung vorzusehen. Der gesamte Speicherkessel kann natürlich auch statt für Erwärmung des Wassers für einen Heizkreislauf auch zur Wassererwärmung für einen Brauchwasserkreislauf verwendet werden.

Der Verdampfer des Wärmekreislaufes kann jeder übliche Verdampfer sein, der vorzugsweise im Außenbereich eines Gebäudes angeordnet wird.

Ein Ausführungsbeispiel der Erfindung wird nun beispielsweise anhand der schematischen Zeichnung beschrieben. Es soll hierbei klargestellt sein, dass die technischen Merkmale der Ausführungsform nicht alle gleichzeitig realisiert sein müssen, sondern optional sind, soweit sie sich nicht gegenseitig bedingen, was jedoch ausdrücklich in der Figurenbeschreibung zum Ausdruck gebracht wird.

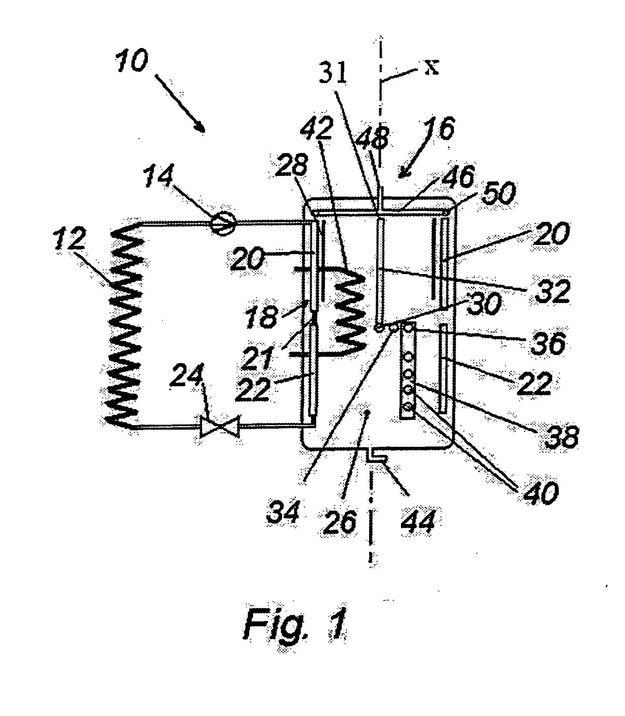

Figur 1 zeigt einen Wärmepumpenkreislauf mit einem integrierten Kondensationsspeicher.

Der Wärmepumpenkreislauf 10 aus Figur 1 besteht aus einem Verdampfer 12, einem in Flussrichtung des Fluids folgenden Kompressor 14, dessen Ausgang mit einem in einem Kondensationsspeicher 16 angeordneten Kondensator 18 verbunden ist. Der Kondensator 18 (bzw. Kondensationswärmetauscher) enthält einen oberen Kondensationswärmetauscherabschnitt 20, und einen mit diesem verbundenen unteren Kondensationswärmetauscherabschnitt 22. Der Ausgang des Kondensators 18 ist mit einem Expansionsventil 24 verbunden, dessen Ausgang wiederum mit dem Verdampfer 12 verbunden ist. Die Komponenten Verdampfer, Kompressor und Expansionsventil des Wärmepumpenkreislaufs 10 sind an sich bekannte Komponenten und werden hier nicht näher erläutert.

Der in einem Speicherkessel 26 integrierte Kondensator 18 bildet zusammen mit dem Speicherkessel 26 einen integrierten Kondensationsspeicher 16.

Der Speicherkessel 26 hat die Form eines Zylinders um die Rotationsachse x mit kreisförmiger Grundfläche. In einem geringen Abstand von der Innenwand des Speicherkessels sind die zwei übereinander angeordneten ringförmigen Wärmetauscherabschnitte 20 und 22 des Kondensators 18 angeordnet, die ausgenommen ihrer Anschlüsse ebenfalls rotationssymmetrisch um die Rotationsachse x angeordnet sind. Die beiden Kondensationswärmetauscherabschnitte 20 und 22 haben aufgrund ihrer Ausbildung, mit der sie einen großen Anteil der Innenfläche des Speicherkessels 26 abdecken, eine sehr große Fläche.

Innerhalb des oberen ringförmigen Kondensationswärmetauscherabschnitts 20 ist eine ringförmige Trennwand 28 angeordnet, die rotationssymmetrisch um die Achse x in einem geringen Abstand von dem oberen Kondensationswärmetauscherabschnitt 20 angeordnet ist und sich senkrecht erstreckt. Der Abstand zwischen dem oberen Kondensationswärmetauscherabschnitt 20 und der Innenwand des Speicherkessels 26 als auch der Abstand der Trennwand 28 von dem oberen Kondensationswärmetauscherabschnitt 20 sind vergleichsweise gering, vorzugsweise zwischen 1 cm und 20 cm, vorzugsweise zwischen 2 cm und 10 cm, so dass eine gewisse Kaminwirkung in diesem ringförmigen Bereich zwischen Innenwand des Speicherkessels 26 und Trennwand 28 erzielt wird. Hierdurch ist der Wärmeaustausch des oberen Kondensationswärmetauscherabschnitts 20 mit dem im Speicherkessel vorhandenen Heizungswasser geringer, weil die mittlere Temperaturdifferenz zwischen den Ein/Ausströmtemperaturen des Fluids und des Heizwassers geringer gehalten werden, so dass eine bessere Ausnutzung der Energie im Überhitzungsbereich oberhalb des Kondensationspunktes realisiert wird. Der Speicherkessel enthält weiterhin einen Heizungsvorlaufanschluss 30, der über ein senkrechtes Rohr 32 mit seiner Öffnung 31 in den oberen Abschnitt des Speicherkessels 26 mündet, d.h. in einen Bereich oberhalb der Trennwand 28. Des Weiteren ist ein mittlerer Heizungsvorlaufanschluss 34 im mittleren Bereich des Speicherkessels 26 vorgesehen. Zwischen dem oberen Heizungsvorlaufanschluss 30 und dem mittleren Heizungsvorlaufanschluss 34 kann vorzugsweise eine Mischarmatur (nicht dargestellt) angeordnet werden, durch welche die Vorlauftemperatur der Heizung individuell eingestellt werden kann. Des Weiteren verfügt der Speicherkessel 26 über einen Heizungsrücklaufanschluss 36, der vorzugsweise über ein Schichtrohr 38 großen Durchmessers, z.B. zwischen 5 und 15 cm Durchmesser mit dem unteren Bereich des Speicherkessels verbunden ist. Die Verbindung des Schichtrohrs 38 mit dem unteren Bereich des Speicherkessels 26 erfolgt über viele Öffnungen 40, wobei das Heizwasser selbsttätig durch die Öffnung 40 in den unteren Bereich des Speicherkessels 26 eintritt, die der Temperatur des Heizungsrücklaufs entspricht. Ein derartiges Schichtrohr für einen Heizungsrücklauf ist an sich bekannt und wird daher nicht näher erläutert.

Optional kann in dem Speicherkessel 26 noch eine Edelstahlwendel 42 für eine Brauchwassererwärmung vorgesehen sein. Ebenso ist es vorteilhaft, wenn am Boden eine Entleerungsöffnung 44 für Wartungszwecke vorgesehen ist.

Vorzugsweise ist im oberen Bereich des Speicherkessels 26 eine Spüleinrichtung 46 vorgesehen, die über einen Spülanschluss 48 mit einem konzentrisch um die Rotationsachse x verlaufenden Ringrohr verbunden ist, welches über dem Kondensator 18 angeordnete und nach unten gerichtete Spülöffnungen 50 aufweist.

Durch die Betätigung der Entleerungsöffnung 44 und der Spüleinrichtung 46 lässt sich mit geringem Aufwand eine einfache Reinigung des Heizungskessels vornehmen.

Wie auf dem Bild zu sehen ist, nehmen der obere Kondensationswärmetauscherabschnitt 20 und der untere Kondensationswärmetauscherabschnitt 22, die über eine Verbindungsleitung 21 miteinander verbunden sind, einen großen Anteil der Innenfläche des Speicherkessels 26 ein. Dies kommt daher, dass der Kondensationswärmetauscher oder Kondensator 18 relativ zur theoretisch erforderlichen Wärmetauscherfläche stark überdimensioniert ist, insbesondere mindestens um den Faktor 2, vorzugsweise sogar um den Faktor 3 und mehr. Auf diese Weise ist es möglich, die im Bereich des Kondensators 18 übertragbaren Energien im Übertemperaturbereich, im Kondensationsbereich und im Unterkühlungsbereich optimal auszuschöpfen, was die Effektivität des Kondensationsspeichers stark heraufsetzt.

Insbesondere durch die Anordnung der oberen ringförmigen Trennwand 28 auf der Innenseite des oberen Kondensationswärmetauscherabschnitts 20 ist es möglich, den Wärmeaustausch mit dem im Speicherkessel 26 vorhandenen Wasser aufgrund einer Verringerung der mittleren Temperaturdifferenz (Siehe Seite 1) herabzusetzen, so dass die Energieausbeute gerade im Übertemperaturbereich des Kondensators 18 erheblich verbessert wird. Die vorliegende Erfindung ist nicht auf das dargestellte Ausführungsbeispiel beschränkt, sondern kann innerhalb des Schutzbereichs der beigefügten Ansprüche variiert werden.

Es wird weiterhin darauf hingewiesen, dass aus Gründen der Klarheit alle Elemente des Wärmepumpenkreislaufs und der Elemente des Kondensationsspeichers einfach dargestellt sind. Jedes Element kann vorzugsweise auch mehrfach oder mehrteilig ausgebildet sein.

**Patentansprüche**

1. Wärmepumpenkreislauf (10) umfassend einen Verdampfer (12), einen Kompressor (14), ein Expansionsventil (24) und einen Kondensationsspeicher (16), umfassend einen Speicherkessel (26) für Wasser eines Heizungs- oder Brauchwassersystems, einen in dem Speicherkessel angeordneten und von dem Kühlmittel des Wärmepumpenkreislaufs durchströmten Kondensationswärmetauscher (18), der ringförmig ausgebildet ist und parallel zu der Innenwand des Speicherkessels angeordnet ist und eine Kontaktfläche mit dem im Speicherkessel befindlichen Heizwasser aufweist, welche Kontaktfläche neben dem Kondensationsenergieanteil auch den Übertemperaturenergieanteil als auch den Unterkühlungsenergieanteil des Kühlmittels weitgehend auf das Wasser im Speicherkessel überträgt, um das Wasser im Speicherkessel über die Temperatur des Kondensationspunktes zu erwärmen, welcher Speicherkessel (26) eine Größe von 200 bis 10001 aufweist, und bei dem die Kontaktfläche des Kondensationswärmetauschers wenigstens 0,7 qm/kW Heizleistung des Wärmepumpenkreislaufs beträgt, wobei der Kondensationswärmetauscher in einen oberen Wärmetauscherabschnitt (20) und einen unteren Wärmetauscherabschnitt (22) unterteilt ist, die übereinander angeordnet sind, und in dem Bereich des oberen Wärmetauscherabschnitts (20), in welchem das Kühlmittel eine Temperatur oberhalb der Kondensationstemperatur aufweist, eine Trennwand (28) angeordnet ist, die den Zugang des Wassers im Speicherkessel (26) zu dem Kondensationswärmetauscher (18) begrenzt, wobei der obere Wärmetauscherabschnitt (20) zwischen der Kesselwand und der Trennwand (28) angeordnet ist, **dadurch gekennzeichnet, dass** der obere Wärmetauscherabschnitt (20) und der untere Wärmetauscherabschnitt (22) über eine Verbindungsleitung (21) miteinander verbunden sind, und dass der Kondensationswärmetauscher (18) in einem geringen Abstand zu der Innenwand des Speicherkessels konzentrisch um die Kesselachse (x) im Randbereich des Speicherkessels angeordnet ist.

2. Wärmepumpenkreislauf (10) nach Anspruch 1, **dadurch gekennzeichnet, dass** die Öffnung (31) des Heizungsvorlaufanschlusses (30) im oberen Bereich oder oberhalb der Trennwand (28) angeordnet ist.

**3.** Wärmepumpenkreislauf (10) nach einem der vorhergehenden Ansprüche, dass sich der Kondensationswärmetauscher (18) über wenigstens 50%, vorzugsweise wenigstens 60% der Fläche der vertikalen Kesselwand erstreckt.

**4.** Wärmepumpenkreislauf (10) nach einem der vorhergehenden Ansprüche, **dadurch gekennzeichnet, dass** der Speicherkessel (26) mindestens einen oberen Heizungsvorlauf-Anschluss (30) im oberen Bereich und einen mittleren Heizungsvorlauf-Anschluss (34) im mittleren Bereich des Speicherkessels (26) aufweist.

**5.** Wärmepumpenkreislauf (10) nach Anspruch 4, **dadurch gekennzeichnet, dass** die beiden Heizungsvorlauf-Anschlüsse (30, 34) mit einer Mischarmatur zum Einstellen einer gewünschten Vorlauftemperatur verbunden sind.

**6.** Wärmepumpenkreislauf (10) nach einem der vorhergehenden Ansprüche, **dadurch gekennzeichnet, dass** der Heizungsrücklauf-Anschluss (36) in ein Schichtrohr (38) mündet, das vertikal in dem Speicherkessel (26) verläuft und mehrere Austritte (40) in unterschiedlicher Höhe des Speicherkessels aufweist.

**7.** Wärmepumpenkreislauf (10) nach einem der vorhergehenden Ansprüche, **dadurch gekennzeichnet, dass** im oberen Bereich des Speicherkessels (26) über dem Kondensationswärmetauscher (18) eine Spüleinrichtung (46) angeordnet ist.

**8.** Wärmepumpenkreislauf (10) nach Anspruch 7, **dadurch gekennzeichnet, dass** die Spüleinrichtung (46) als Ringrohr mit nach unten ausgerichteten Spülöffnungen (50) ausgebildet ist.

**9.** Wärmepumpenkreislauf (10) nach einem der vorhergehenden Ansprüche, **dadurch gekennzeichnet, dass** der Innenraum des Speicherkessels (26) mit einem Heizungskreislauf verbunden ist, und dass innerhalb des Speicherkessels eine sich vertikal erstreckende Rohrwendel (42) für eine Brauchwassererwärmung angeordnet ist.

**10.** Wärmepumpenkreislauf (10) nach einem der vorhergehenden Ansprüche, **dadurch gekennzeichnet, dass** die Größe der Fläche des Kondensationswärmetauschers (18) in dem Kondensationsspeicher (16) wenigstens dem zweifachen, insbesondere mehr als dem Dreifachen des theoretischen Wertes für die notwendige Fläche des Wärmepumpenkreislaufs entspricht.

**Claims**

**1.** Heat pump circuit (10) comprising an evaporator (12), a compressor (14), an expansion valve (24) and a condensation store (16), comprising a storage tank (26) for water of a heating water or tap water system,
a condensation heat exchanger (18), which is arranged in the storage tank and is flowed through by the coolant of the heat pump circuit, and which is formed annular and is arranged parallel to the internal wall of the storage tank and has a contact area with the heating water located in the storage tank, which contact area also largely transmits the overtemperature energy portion and the undercooling energy portion of the coolant, as well as the condensation energy portion, to the water in the storage tank, so as to heat the water in the storage tank above the temperature of the condensation point,
which storage tank (26) has a size of 200 to 1000 1, and in which the contact area of the condensation heat exchanger is at least 0.7 $m^2$/kW heating power of the heat pump circuit,
the condensation heat exchanger being subdivided into an upper heat exchanger portion (20) and a lower heat exchanger portion (22), arranged one above the other, and a partition wall (28), which limits the access of the water in the storage tank (26) to the condensation heat exchanger (18), being arranged in the region of the upper heat exchanger portion (20) in which the coolant has a temperature above the condensation temperature, the upper heat exchanger portion (20) being arranged between the tank wall and the partition wall (28), **characterised in that** the upper heat exchanger portion (20) and the lower heat exchanger portion (22) are interconnected via a connecting line (21), and **in that** the condensation heat exchanger (18) is arranged in the edge region of the of the storage tank at a small distance from the inner wall of the storage tank, concentrically about the tank axis (x).

**2.** Heat pump circuit (10) according to claim 1, **characterised in that** the opening (31) of the heating flow connection (30) is arranged in the upper region of or above the partition wall (28).

**3.** Heat pump circuit (10) according to any of the preceding claims, **characterised in that** the condensation heat exchanger (18) extends over at least 50 %, preferably at least 60 %, of the area of the vertical tank wall.

**4.** Heat pump circuit (10) according to any of the preceding claims, **characterised in that** the storage tank (26) comprises at least an upper heating flow connection (30) in the upper region and a central heating flow connection (34) in the central region of the storage tank (26).

5. Heat pump circuit (10) according to claim 4, **characterised in that** the two heating flow connections (30, 34) are connected to a mixer for setting a desired flow temperature.

6. Heat pump circuit (10) according to any of the preceding claims, **characterised in that** the heating return connection (36) opens into a stratified pipe (38), which extends vertically in the storage tank (26) and which comprises a plurality of outlets (40) at different levels of the storage tank.

7. Heat pump circuit (10) according to any of the preceding claims, **characterised in that** a flushing device (46) is arranged in the upper region of the storage kettle (26) above the condensation heat exchanger (18).

8. Heat pump circuit (10) according to claim 7, **characterised in that** the flushing device (46) is formed as an annular pipe having downwardly directed flushing openings (50).

9. Heat pump circuit (10) according to any of the preceding claims, **characterised in that** the interior of the storage tank (26) is connected to a heating circuit, and **in that** vertically extending coiled tubes (42) for heating tap water are arranged inside the storage tank.

10. Heat pump circuit (10) according to any of the preceding claims, **characterised in that** the value of the area of the condensation heat exchanger (18) in the condensation store (16) is at least twice, in particular more than three times, the theoretical value for the required area of the heating pump circuit.

## Revendications

1. Circuit de pompe à chaleur (10) comprenant un évaporateur (12), un compresseur (14), une soupape de détente (24) et un réservoir à condensation (16), comprenant une cuve de stockage (26) pour l'eau d'un système de chauffage et d'eau sanitaire, un échangeur thermique à condensation (18) disposé dans la cuve de stockage et traversé par le réfrigérant du circuit de pompe à chaleur à condensation, qui a une forme annulaire et est disposé parallèle à la paroi interne de la cuve de stockage et présente une surface de contact avec l'eau de chauffage se trouvant dans la cuve de stockage, laquelle surface de contact transmet largement, outre la part d'énergie de condensation, également la part d'énergie de surtempérature ainsi que la part d'énergie de sousrefroidissement du réfrigérant à l'eau dans la cuve de stockage pour faire chauffer l'eau dans la cuve de stockage au-dessus de la température du point de rosée,

laquelle cuve de stockage (26) présente un volume de 200 à 1000 1, et pour laquelle la surface de contact de l'échangeur thermique à condensation est d'au moins 0,7 m2/kW de puissance calorifique du circuit de pompe à chaleur,

l'échangeur thermique à condensation étant divisé en une section d'échangeur thermique supérieure (20) et une section d'échangeur thermique inférieure (22), qui sont disposées l'une au-dessus de l'autre, et une paroi de séparation (28) étant disposée au niveau de la section d'échangeur thermique supérieure (20), dans laquelle le réfrigérant présente une température supérieure à la température de rosée, qui limite l'accès de l'eau dans la cuve de stockage (26) vers l'échangeur thermique à condensation (18), la section d'échangeur thermique supérieure (20) étant disposée entre la paroi de la cuve et la paroi de séparation (28), **caractérisé par le fait que** la section d'échangeur thermique supérieure (20) et la section d'échangeur thermique inférieure (22) étant raccordées entre elles par l'intermédiaire d'une conduite de raccordement (21), et que l'échangeur thermique à condensation (18) est disposé à faible distance de la paroi interne de la cuve de stockage de manière concentrique autour de l'axe de cuve (X) dans la zone périphérique de la cuve de stockage.

2. Circuit de pompe à chaleur (10) selon la revendication 1, **caractérisé par le fait que** l'ouverture (31) du raccord d'aller de chauffage (30) est disposée dans la zone supérieure ou au-dessus de la paroi de séparation (28).

3. Circuit de pompe à chaleur (10) selon l'une quelconque des revendications précédentes, **caractérisé par le fait que** l'échangeur thermique à condensation (18) s'étend sur au moins 50 %, préférentiellement au moins 60 %, de la surface de la paroi de cuve verticale.

4. Circuit de pompe à chaleur (10) selon l'une quelconque des revendications précédentes, **caractérisé par le fait que** la cuve de stockage (26) présente au moins un raccord d'aller de chauffage supérieur (30) dans la zone supérieure et un raccord d'aller de chauffage central (34) dans la zone centrale de la cuve de stockage (26).

5. Circuit de pompe à chaleur (10) selon la revendication 4, **caractérisé par le fait que** les deux raccords d'aller de chauffage (30, 34) sont raccordés à un robinet mitigeur pour régler une température d'aller souhaitée.

6. Circuit de pompe à chaleur (10) selon l'une quelconque des revendications précédentes, **caractérisé par le fait que** le raccord de retour de chauffage (36) débouche dans un tube à stratification (38), qui s'étend verticalement dans la cuve de stockage (26) et présente plusieurs sorties (40) à différentes hauteurs de la cuve de stockage.

7. Circuit de pompe à chaleur (10) selon l'une quelconque des revendications précédentes, **caractérisé par le fait qu'**un dispositif de purge (46) est disposé dans la zone supérieure de la cuve de stockage (26) au-dessus de l'échangeur thermique à condensation (18).

8. Circuit de pompe à chaleur (10) selon la revendication 7, **caractérisé par le fait que** le dispositif de purge (46) est réalisé sous la forme d'un tube annulaire comportant des ouvertures de purge (50) orientées vers le bas.

9. Circuit de pompe à chaleur (10) selon l'une quelconque des revendications précédentes, **caractérisé par le fait que** l'intérieur de la cuve de stockage (26) est raccordé à un circuit de chauffage, et qu'une conduite hélicoïdale (42) s'étendant verticalement est disposée à l'intérieur de la cuve de stockage pour chauffer l'eau sanitaire.

10. Circuit de pompe à chaleur (10) selon l'une quelconque des revendications précédentes, **caractérisé par le fait que** la taille de la surface de l'échangeur thermique à condensation (18) correspond dans le réservoir à condensation (16) au moins au double, en particulier à plus du triple de la valeur théorique de la surface nécessaire du circuit de pompe à chaleur.

Fig. 1

# EP 2 295 889 B1

**IN DER BESCHREIBUNG AUFGEFÜHRTE DOKUMENTE**

**In der Beschreibung aufgeführte Patentdokumente**

- DE 2729668 A1